# EUROPÄISCHE PATENTANMELDUNG

(11) **EP 2 827 129 A1**
(43) Veröffentlichungstag der Anmeldung: **21.01.2015**
(21) Anmeldenummer: 14174756.8
(22) Anmeldetag: 27.06.2014
(51) Int. Cl.: G01N 21/47, G01N 21/53

(54) **Verfahren zur Kalibrierung eines Streulichtmessgerätes**

(30) Priorität: 19.07.2013 AT 504602013
(71) Anmelder: DiTest Fahrzeugdiagnose GmbH, 8020 Graz (AT)
(72) Erfinder: Axmann, Harald, 8501 Lieboch (AT); Bergmann, Alexander, 8052 Graz (AT); Lukesch, Walter, 8041 Graz (AT); Kohl, Anton, 8263 Großwilfersdorf (AT)
(74) Vertreter: Patentanwälte Pinter & Weiss OG

(57) **Zusammenfassung**

Für die Kalibrierung eines Streulichtmessgerätes (1) bei sehr geringen Streulichtintensitäten, wird einer Messzelle (3) des Streulichtmessgerätes (1) ein partikelfreies Kalibriergas zugeführt und zur Kalibrierung die Streuung eines in die Messzelle (3) eingestrahlten Lichtstrahls (25) an den Gasmolekülen des Kalibriergases gemessen.

## Beschreibung

Die gegenständliche Erfindung betrifft ein Verfahren zur Kalibrierung eines Streulichtmessgerätes und ein entsprechendes Streulichtmessgerät.

Partikelemissionen von Diesel- und Otto-Motoren stellen ein signifikantes Problem für die Umwelt und das Klima dar. Daneben wird Partikelemissionen auch ein Gesundheitsrisiko zugesprochen. Daher werden die zulässigen Partikelemissionen von Verbrennungsmotoren durch den Gesetzgeber zunehmend beschränkt. Das führte unter anderem zur Entwicklung von neuen Motortechnologien und Abgas-Nachbehandlungssystemen, wie z.B. Dieselpartikelfiltern. Aufgrund von Alterung und möglichen Beschädigungen des Fahrzeugs, können sich die Partikelemissionen eines Fahrzeugs über die Lebensdauer erhöhen. Daher ist es erforderlich, dass die Einhaltung der Grenzwerte für zulässige Partikelemissionen regelmäßig geprüft wird. Dazu sind Messgeräte bekannt, wie z.B. Opazimeter oder Streulichtmessgeräte, die die Opazität des Abgases oder die Partikelkonzentration im Abgas messen. Ein solches Streulichtmessgerät ist z.B. aus der EP 2 500 710 A1 bekannt. Hier wird Abgas durch ein Messvolumen geleitet, auf das ein Laserstrahl gerichtet ist, der durch die im Abgas enthaltenen Partikel gestreut wird. Das Streulicht wird durch Detektoren erfasst und kann ausgewertet werden. Das Messvolumen ist zusätzlich von einem partikelfreien Gasstrom umgeben, um die optischen Elemente des Streulichtmessgerätes vor Verschmutzung zu schützen.

Messgeräte, und daher auch Streulichtmessgeräte, müssen im Betrieb regelmäßig kalibriert werden, um die Einhaltung der vorgegebenen Messtoleranzen sicherzustellen. Zur Kalibrierung wird in der Regel ein Kalibrierkörper mit definierten Streuzentren eingebracht, der eine bestimmte Streulichtverteilung erzeugt, die von den Detektoren erfasst wird und zur Kalibrierung ausgewertet wird. Ein solcher Kalibrierkörper ist z.B. aus der AT 12313 U1 bekannt.

Hier ist anzumerken, dass grundsätzlich zwischen Nullung und Kalibrierung zu unterscheiden ist. Bei der Nullung wird ein partikelfreies Nullgas, in der Regel gefilterte Luft, in das Streulichtmessgerät eingebracht. Ein in diesem Betriebsmodus allfällig detektiertes Streulichtsignal, z.B. zurückzuführen auf Reflexionen des eingestrahlten Lichts an der Messgeometrie oder Rayleigh-Streuung der Luft, ist als Nullpunkt für den Messmodus zu erachten und kann folglich bei der Messung vom tatsächlichen Messwert abgezogen werden. Bei der Kalibrierung wird durch Einbringung definierter Streumedien in den Strahlengang ein definiertes Streulicht erzeugt, um einen damit verbundenen und mit einem Detektor erfassten Messwert mit einem zu erwartenden Messwert abzugleichen.

Solche Kalibrierkörper erzeugen eine ausreichend hohe Streuung des eingestrahlten Lichts, um ein hohes Signalansprechen an den Detektoren bzw. an der damit verbundenen Auswerteelektronik sicherzustellen.

Die immer höheren Anforderungen an die Auflösung bzw. an die untere Detektionsgrenze bezüglich Partikelgröße und an die Messgenauigkeit eines Streulichtmessgeräts können durch verbesserte optische Elemente (Laser, Detektoren, etc.) und/oder eine verbesserte Auswerteelektronik an sich erfüllt werden. Allerdings bedingt das auch eine entsprechende Kalibrierung des Streulichtmessgeräts im Bereich sehr kleiner Partikelgrößen bzw. Partikelkonzentrationen, also bei geringer Streulichtintensität, da nur dann eine ausreichend genaue Messung in diesem Bereich sichergestellt werden kann. Eine Kalibrierung mit bekannten Kalibrierkörpern kann das nicht leisten, bzw. wäre die Herstellung eines Kalibrierkörpers für diesen Bereich äußerst aufwendig. Schon kleinste Staubteilchen oder Kratzer am Kalibrierkörper würden die Kalibrierung negativ beeinflussen. Außerdem müsste der Kalibrierkörper im Streulichtmessgerät auch sehr genau positioniert werden, was den Vorgang des Kalibrierens aufwendig macht. Das könnte im Laborumfeld oder am Prüfstand noch umgesetzt werden, im Werkstattbereich, wo die Streulichtmessgeräte zum Einsatz kommen sollen, ist das aber nicht mehr handhabbar.

Es ist daher eine Aufgabe der gegenständlichen Erfindung, ein Verfahren und eine Vorrichtung anzugeben, die ein einfaches und sicheres Kalibrieren bei geringer Streulichtintensität ermöglichen.

Diese Aufgabe wird erfindungsgemäß dadurch gelöst, dass der Messzelle des Streulichtmessgerätes ein partikelfreies Kalibriergas zugeführt wird und zur Kalibrierung die Streuung eines eingestrahlten Lichtstrahls an den Gasmolekülen des Kalibriegases gemessen wird. Durch die Streuung an den Gasmolekülen des Kalibriergases wird eine von einem Detektor erfassbare und auflösbare, aber sehr geringe Streuintensität erzeugt, mit der das Streulichtmessgerät für geringe Streulichtintensitäten, und damit für geringe Partikelkonzentrationen in einem Messgas, kalibriert werden kann. Das ermöglicht die sichere, zuverlässige und aussagekräftige Messung auch von sehr geringer Partikelkonzentration durch das Streulichtmessgerät. Dazu kommt, dass die Kalibrierung mittels Kalibriergas unter gleichen Randbedingungen (Druck, Temperatur) überall gleich funktioniert, was das Kalibrierverfahren universell einsetzbar macht. Kalibriergas kann auch in ausreichender Menge und Qualität und in handhabbaren Gebinden (z.B. Gasflasche) zur Verfügung gestellt werden, was den Einsatz insbesondere auch in Werkstätten ermöglicht.

Durch Variation des Druckes, bzw. der Temperatur, des Kalibriergases können mit dem Kalibriergas auf einfache, nachvollziehbare Weise unterschiedliche Kalibrierpunkte erzeugt werden, was die Kalibrierung sicherer machen kann. Dazu kann z.B. in der Kalibriergasleitung oder in einer Ableitung für Gas aus der Messzelle eine Druckregeleinrichtung vorgesehen sein.

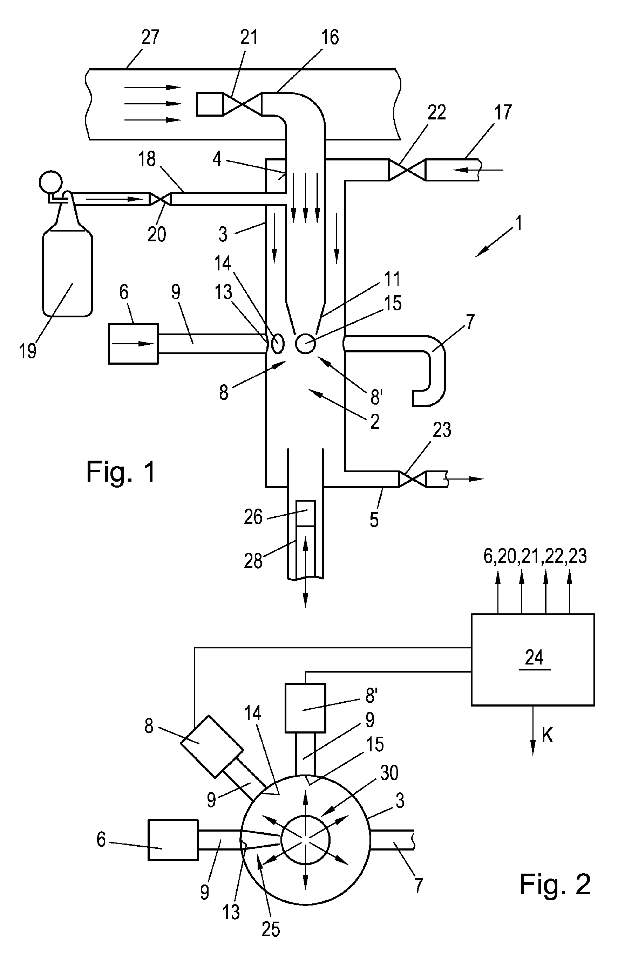

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigen die Figuren ein Streulichtmessgerät, das für Kalibrierung mit Kalibriergas eingerichtet ist.

Das in Fig. 1 und 2 dargestellte Streulichtmessgerät 1 ist beispielsweise zur kontinuierlichen Messung der Partikelkonzentration im Abgas von Brennkraftmaschinen geeignet, wobei dieses Abgas über eine Sonde 16, beispielsweise im Auspuff 27 am Auspuffende der Brennkraftmaschine, entnommen und dem Streulichtmessgerät 1 über eine Zuleitung 4 als Messgas 12 zugeführt werden kann. Das Streulichtmessgerät 1 besteht im Wesentlichen aus einer ein Messvolumen 2 umgebenden Messkammer 3, welche eine Zuleitung 4 und Ableitung 5 für das partikelbeladene Messgas 12 zum bzw. vom Messvolumen 2 und eine Lichtquelle 6, wie z.B. einen Laser, mit zugehöriger, im Strahlweg gegenüberliegender Lichtsenke 7 aufweist. Weiters ist zumindest eine Detektoranordnung 8 angeordnet, die das aufgrund der Partikel im Messgas 12 abgestrahlte Streulicht 30 in der Ebene des Lichtstrahls 25, bzw. in einer Querschnittsebene der Messkammer 3, erfasst. Ebenso können in gleicher Weise um Winkel versetzt noch weitere Detektoranordnungen 8' angeordnet sein, wie in Fig. 2 besser ersichtlich. D.h., dass die Detetektoranordnung 8 bzw. 8', oder zumindest die optischen Fenster 14, 15 in der Messzelle 3, in der Ebene des Lichtstrahls 25, bzw. in einer Querschnittsebene der Messkammer 3, angeordnet sind. Die Lichtquelle 6 und/oder die Detektoranordnung 8, 8' kann auch direkt an der Messkammer 3 angeordnet sein und nicht wie hier dargestellt in Abstand dazu. Die optischen Fenster 13, 14 und 15 können dazu als Linsenoptikvorsätze am Ende von Lichtleitern 9 ausgebildet sein, welche Lichtquelle 6 und Detektoranordnung 8, 8' mit den optischen Fenstern 13, 14, 15 verbinden, was Temperaturein- bzw. -austrag verhindert.

Über eine Leitung 17 kann der Messzelle 3 auch Spülgas, z.B. gefiltertes Abgas oder gefilterte Luft, zugeführt werden, wobei das Spülgas das Messvolumen 2 bzw. das Messgas 12 in der Messzelle 3 umgibt. Das Spülgas strömt hier zwischen Messgas 12 und der Wand der Messzelle 3. Damit kann verhindert werden, dass partikelbeladenes Messgas 12 mit den optischen Elementen (Lichtleiter 9, optische Fenster 13, 14, 15) in der Messzelle 3 in Kontakt gerät, was zu einer Verschmutzung der optischen Elemente und damit zu einer Beeinträchtigung des Messergebnisses führen könnte.

Zur Kalibrierung des Streulichtmessgerätes 1 bei sehr niedrigen Partikelkonzentrationen mündet in die Messzelle 3, entweder direkt oder über die Zuleitung 4 oder die Spülgasleitung 17, eine Kalibriergasleitung 18, über die ein partikelfreies Kalibriergas in die Messzelle 3 zugeführt werden kann. Die Kalibriergasleitung 18 ist dazu mit einem Kalibriergasspeicher 19, z.B. einer Gasflasche, verbunden und kann mit einem Ventil 20 abgesperrt werden. Bei Vorhandensein von Partikeln im Kalibriergas können diese durch einen zwischengeschalteten, in der Kalibriergasleitung angeordneten Filter mit einem entsprechenden Abscheidegrad entfernt werden, damit der Messzelle 3 partikelfreies Kalibriergas zugeführt werden kann.

Unter einem partikelfreien Gas wird hier ein Gas verstanden, das keine Partikeln in Größe oder Konzentration enthält, die zu einem Ansprechen des Streulichtmessgerätes 1 führen würde. Jedes Streulichtmessgerät 1 hat eine gewisse Nachweisgrenze an Streulichtintensität. Die möglicherweise im Gas enthaltenen Partikeln sind entweder so klein oder so gering in Konzentration, dass die Streuung daran keine ausreichende, detektierbare Streulichtintensität erzeugt. Das partikelfreie Gas wird in Regel durch Filterung eines Gases, z.B. mit einem HEPA Filter (High Efficient Particulate Airfilter), erzeugt. Ein solcher Filter filtert z.B. laut dessen Spezifikation (je nach Typ) 99,99% der Partikel ab einer bestimmten Größe, z.B. 100nm, aus einem Gas aus. Damit bleibt zwangsweise eine gewisse Anzahl von Partikeln einer gewissen Größe im Gas enthalten. Die übrig bleibende Partikelkonzentration mit entsprechender Partikelgrößenverteilung muss aber unterhalb der Nachweisgrenze des Streulichtmessgerätes 1, die natürlich für jedes Streulichtmessgerät 1 auch verschieden sein kann, liegen.

Hier ist auch anzumerken, dass trotz der Verwendung partikelfreier Gase im Messvolumen messbare Partikel vorkommen können. Dies liegt daran, dass sich größere Partikelablagerungen von der Messzelle 3 oder den Rohrleitungen ablösen können und mit dem Gasstrom mitgerissen werden können. Solche einzelne größere Partikel, die an sich nicht verhindert werden können, sind aber sehr selten und machen sich im Messsignal als schmale Peaks bemerkbar, die durch die Auswerteelektronik oder -software problemlos korrigiert werden können. Solche Ausreißer schaden daher der Kalibrierung mit einem partikelfreien Kalibriergas nicht.

Trotzdem kann die Kalibrierung sicherer gemacht werden, wenn die Messzelle 3 vor der Kalibirierung zuerst mit dem partikelfreien Kalibriergas gespült wird, um z.B. Partikelablagerungen zu lösen und aus der Messzelle 3 zu transportieren, und erst dann die eigentliche Kalibrierung angestoßen wird.

Zusätzlich können noch Heizelemente an der Messzelle 3 und/oder an der Zuleitung 4 und/oder an der Spülgasleitung 17 vorgesehen sein, um das Messgas 12 bzw. das Kalibriergas in der Messzelle 3 temperieren zu können. Auch an der Kalibriergasleitung 18 kann ein Heizelement angeordnet sein, um die Temperatur des zugeführten Kalibriergases einstellen zu können.

Um ein Rückströmen des Kalibriergases in den Auspuff 27 oder in die Spülgasleitung 17 zu verhindern, kann auch in der Zuleitung 4 oder in der Sonde 16 ein Ventil 21 und in der Spülgasleitung ein Ventil 22 vorgesehen sein. Auch in der Ableitung 5 kann ein Ventil 23 angeordnet sein.

Für eine normale Messung der Partikelkonzentration im Messgas 12 ist das Ventil 20 geschlossen und die Ventile 21, 22, 23 geöffnet. Das von den Detektoren 8, 8' aufgrund des Streulichts 30 erzeugte elektrische Signal wird einer Steuereinheit 24 zugeführt, in der sich die Auswerteelektronik befindet, mit der die elektrischen Signale der Detektoren 8, 8' in eine korrespondierende Partikelkonzentration K umgerechnet wird, die ausgegeben und/oder angezeigt werden kann.

Zur Kalibrierung des Streulichtmessgeräts 1 für sehr niedrige Partikelkonzentrationen werden die Ventile 21, 22 vorzugsweise geschlossen. Das Ventil 23 kann offen bleiben, oder geschlossen werden, was eine Kalibrierung bei einem hohen Druck in der Messzelle 3 ermöglicht. Das Ventil 20 wird geöffnet und partikelfreies Kalibriergas über die Kalibriergasleitung 18 der Messzelle 3 zugeführt, womit die Messzelle 3 mit Kalibriergas ausgefüllt wird.

Im Messvolumen erfolgt nun eine Streuung des Lichtstrahls 25 an den Gasmolekülen des Kalibriergases, was zu einer sehr geringen Streulichtintensität führt, die von den Detektoren 8, 8' erfasst wird. Die damit erreichte Streulichtintensität muss lediglich über der Auflösungsgrenze der Detektoren 8, 8' bzw. der Auswerteelektronik liegen, was durch die Streuung an den Gasmolekülen möglich ist. Die Streulichtintensität muss weiters über der von Streuung an Luftmolekülen, bzw. über der eines verwendeten Nullgases, liegen, um die sichere Unterscheidbarkeit zur Nullung, die mit gefilterter Luft erfolgen kann, sicherzustellen.

Wird unter Druck kalibriert (z.B. bei geschlossenem Ventil 23), z.B. bei 10 bar, kann die Anzahl der Gasmoleküle des Kalibriergases in der Messzelle 3 und damit auch die Streulichtintensität zur Kalibrierung natürlich erhöht werden. Dazu kann in der Kalibriergasleitung 18 oder in der Ableitung 5 auch eine Druckregeleinheit, beispielsweise in Form regelbarer Ventile 20, 23 oder in Form von Drosseln, vorgesehen sein, um den Druck in der Messzelle 3 genau einstellen zu können.

An dieser Stelle ist darauf hinzuweisen, dass sich die Streuung an Gasmolekülen von der an Partikeln unterscheidet. Unter Partikeln wird hier die Agglomeration mehrerer Moleküle, die in der Regel keine atomaren Bindungen aufweisen, verstanden. Die Streuung an Gasmolekülen unterliegt der sogenannten Rayleigh-Streuung, während die Streuung an Partikeln aufgrund ihrer typischerweise deutlich größeren Ausdehnung anderen Gesetzmäßigkeiten unterliegt (z.B. der Mie-Streuung bei kugelförmigen Partikeln). Streuung an Gasmolekülen und an Partikeln ist daher physikalisch zu unterscheiden.

Die Streulichtintensität steigt bei Gasen im Quadrat zur Polarisierbarkeit des Gases, wobei die Streulichtintensität im Vergleich zur Streulichtintensität einer Partikelstreuung um viele Größenordnungen geringer ist. Ein Vergleich der Streulichtintensität bei Streuung an einem O₂-Molekül mit einem typischen 100 nm Rußpartikel ergab einen Unterschied von 18 Größenordnungen (10¹⁸), woraus der signifikante Unterschied zwischen Streuung an Gasmolekülen und Partikeln deutlich wird. Wenn für die praktischen Anwendbarkeit des Kalibriergases noch allgemeine Eigenschaften, wie z.B. nicht brennbar, nicht giftig, nicht explosiv, günstig, verfügbar in ausreichender und wiederholbarer Güte, berücksichtigt werden, schränkt sich die Auswahl der möglichen Kalibriergase ein. Als Kalibriergase kommen z.B. Stickstoffdioxid, Kohlenstoffdioxid oder verschiedene Kohlenwasserstoffe in Frage.

Die geringe Streuung an einem einzelnen Molekül wird aber durch die hohe Anzahl an Gasmolekülen ausgeglichen, sodass trotzdem eine detektierbare Streulichtintensität entsteht. Anhand des Druckes und der Temperatur kann auch eine Abschätzung erfolgen, wie viele Gasmoleküle pro Volumeneinheit, z.B. 1 cm³, enthalten sind. Zum Vergleich kann man von ungefähr 10¹⁹ Gasmolekülen pro cm³ ausgehen, während bei einem stark rußenden Fahrzeug die Partikelanzahl bei ungefähr 10⁷ pro cm³ liegt.

Durch die Kalibrierung erhält man einen Kalibrierpunkt bei sehr geringer Streulichtintensität und kann zusammen mit dem bei der Nullung bestimmten Nullpunkt die Linearität des Streulichtmessgeräts 1 bei niedrigen Streulichtintensitäten überprüfen. Auf diese Weise können auch für geringe bis sehr geringe Partikelkonzentration sichere und aussagekräftige Messergebnisse sichergestellt werden.

Durch Variation des Drucks, und gegebenenfalls der Temperatur, des Kalibriergases (und damit der Molekülanzahl) in der Messzelle 3 bei der Kalibrierung mit Kalibriergas, können natürlich noch weitere Kalibrierpunkte erzeugt werden. Allerdings kann der Druck bzw. die Temperatur aufgrund konstruktiver Beschränkungen des Streulichtmessgerätes 1 natürlich nicht beliebig erhöht werden.

Daher kann vorgesehen sein, dass zusätzlich noch mit einem herkömmlichen Kalibrierkörper 26 (wie z.B. in der AT 12313 U1 beschrieben) kalibriert wird, um höhere Streulichtintensitäten zu erzeugen. Der Kalibrierkörper 26 kann an einem Haltelement 28 angeordnet sein, um den Kalibrierkörper 26 zu halten und in die Messkammer 3 einführen zu können (wie durch den Doppelpfeil in Fig.1 angedeutet). Der Kalibrierkörper 26 wird dabei in den Bereich des Messvolumens 2 eingeführt, sodass der Lichtstrahl 25 daran in definierter Weise gestreut wird, um eine definierte erfassbare Streulichtintensität zu erzeugen.

Die Komponenten des Streulichtmessgeräts 1, wie Ventile 20, 21, 22, 23, Druckregeleinrichtungen, Laser 6, können von der Steuereinheit 24 angesteuert werden. Die Steuereinheit dient auch zur Steuerung der Funktion des Streulichtmessgeräts 1, also Umschalten zwischen Messung und Kalibrierung. Dazu kann die Steuereinheit 24 auch eine entsprechende I/O-Schnittstelle vorsehen.

## Patentansprüche

1. Verfahren zur Kalibrierung eines Streulichtmessgerätes (1), wobei einer Messzelle (3) des Streulichtmessgerätes (1) ein partikelfreies Kalibriergas zugeführt wird und zur Kalibrierung die Streuung eines in die Messzelle (3) eingestrahlten Lichtstrahls (25) an den Gasmolekülen des Kalibriegases gemessen wird.

2. Verfahren nach Anspruch 1, **dadurch gekennzeichnet, dass** das Kalibriergas der Messzelle (3) unter Druck zugeführt wird.

3. Streulichtmessgerät mit einer Messzelle (3) und einer Lichtquelle (6), die Licht in die Messzelle (3) einstrahlt, wobei in die Messzelle (3) eine Kalibriergasleitung (18) mündet, über die partikelfreies Kalibriergas in die Messzelle (3) zuführbar ist und ein Detektor (8, 8') vorgesehen ist, der das an den Gasmolekülen des Kalibriergases gestreute Licht (30) erfasst.

4. Streulichtmessgerät nach Anspruch 3, **dadurch gekennzeichnet, dass** in der Kalibriergasleitung (18) und/oder in einer Ableitung (5) von Gas aus der Messzelle (3) eine Druckregeleinrichtung vorgesehen ist.
